(19) Europäisches Patentamt

European Patent Office

Office européen des brevets

(11) **EP 1 681 310 A1**

(12) **EUROPÄISCHE PATENTANMELDUNG**

(43) Veröffentlichungstag:
 **19.07.2006 Patentblatt 2006/29**

(51) Int Cl.:
 *C08G 18/12* (2006.01)   *C08G 18/36* (2006.01)
 *C08G 18/66* (2006.01)   *C09J 175/04* (2006.01)
 *C09D 175/04* (2006.01)

(21) Anmeldenummer: 05028705.1

(22) Anmeldetag: **30.12.2005**

(84) Benannte Vertragsstaaten:
 **AT BE BG CH CY CZ DE DK EE ES FI FR GB GR HU IE IS IT LI LT LU LV MC NL PL PT RO SE SI SK TR**
 Benannte Erstreckungsstaaten:
 **AL BA HR MK YU**

(30) Priorität: **13.01.2005   DE 102005001565**

(71) Anmelder: **Bayer MaterialScience AG**
 **51368 Leverkusen (DE)**

(72) Erfinder:
 • **Meckel, Walter, Dr.**
  **40627 Düsseldorf (DE)**
 • **Mayer, Eduard, Dr.**
  **41539 Dormagen (DE)**
 • **Wintermantel, Mathias, Dr.**
  **51061 Köln (DE)**

(54) **Holzklebstoffe**

(57)   Die vorliegende Erfindung betrifft die Verwendung von Zusammensetzungen auf Basis spezieller Isocyanatterminierter Prepolymere als Holzklebstoffe.

EP 1 681 310 A1

**Beschreibung**

Die vorliegende Erfmdung betrifft die Verwendung von Zusammensetzungen auf Basis spezieller Isocyanatterminierter Prepolymere, insbesondere als Rohstoffe zur Herstellung von Beschichtungs- und Klebstoffen, insbesondere Holzklebstoffen.

Klebstoffe auf Basis von Phenol- bzw. Resorcin- oder Melamin-Formaldehydkondensaten sind bekannt und werden zur Verklebung von Holz, insbesondere bei stark beanspruchten, langlebigen Holzkonstruktionen eingesetzt (z.B. EP-A 0 879 270). Bei der Reaktion der wässrigen Härtermischung mit dem Melaminharz handelt es sich um eine Polykondensation, bei der beim Polymeraufbau Wasser freigesetzt wird. Daher müssen für einen reproduzierbaren Ablauf der Reaktion strenge Voraussetzungen an den Wassergehalt des Holzes erfüllt sein.

Im Falle stark beanspruchter Holzkonstruktionen, wie z.B. tragenden Bauteilen, werden hohe Anforderungen an die mechanische Festigkeit der Bauteile gestellt. Beispielsweise sollte die Verbundfestigkeit auch noch nach vielen Jahren unter Witterungseinflüssen ausreichend hoch sein.

Die generelle Brauchbarkeit von Klebstoffen wird durch die Erfüllung von Normen, wie beispielsweise die DIN EN 204, Beanspruchungsgruppe D4 oder WATT 91 (Wood Adhesives Temperature Test) festgestellt.

Das Kleben von Holz mit Polyurethanklebstoffen sowohl als Einkomponenten- als auch als Zweikomponenten-System ist seit langem bekannt und wird in der Zeitschrift "Adhäsion - Kleben & Dichten", 41, 1-2/97, S. 37-38 (1997) beschrieben. Einkomponenten-Systeme eignen sich insbesondere für Holzsubstrate, da der natürliche Feuchtigkeitsgehalt des Holzes dafür sorgt, dass genügend Wasser als Reaktionspartner zur Verfügung steht. Damit erübrigt sich die Notwendigkeit den Wassergehalt exakt zu kontrollieren oder wie bei vielen wasserundurchlässigen Substraten üblich, eine Benebelung der Substratoberflächen mit Wasser durchzuführen, um eine vollständige Reaktion zu gewährleisten.

Als nachteilig zeigt sich jedoch insbesondere bei Zweikomponenten-Systemen, dass bei Einsatz niedrigviskoser Polyisocyanate diese beim Pressvorgang in das Holz migrieren. Dies führt zwar zu einer guten Verbindung zwischen Klebstoff und Holz, jedoch findet im Falle einer zu starken Migration eine unkontrollierte Verschiebung des für den Polymeraufbau wichtigen NCO/OH-Verhältnisses der Klebstoffmischung in der Klebfuge statt. Bei niedrigviskosen Einkomponentensystemen verarmt die Klebfuge, insbesondere die Grenzfläche Holz/Klebstoff an Polyisocyanat; in beiden Fällen können im Extremfall Fehlklebungen auftreten.

Um eine ausreichende Konzentration von Klebstoff in der Klebfuge zu gewährleisten, ist es möglich höherviskose Systeme einzusetzen, die jedoch bei der Applikation große Probleme bereiten.

Eine andere Möglichkeit besteht in der Zugabe von Füllstoffen. Geeignete Füllstoffe sind beispielsweise organische Füllstoffe; mineralische Füllstoffe sind weniger geeignet, da sie leicht zur Sedimentation neigen und bei der maschinellen Förderung zu erhöhten Abriebwerten in den komplexen Pump- und Dosiersystemen führen können.

Als organische Füllstoffe können beispielsweise Holzmehl, Zellulosefasern, aber auch Kunststofffasem eingesetzt werden. Kunststofffasern in Form von Mikrokurzfasern wirken zusätzlich als Thixotropiezusatz. Besonders geeignete Füllstoffe sind in situ hergestellte Dispersionen von Polyharnstoffen und/oder Polyhydrazodicarbonamiden in Hydroxylgruppen aufweisenden Polyethern, die im großen Rahmen zur Herstellung von Polyurethan-Schaumstoffen mit erhöhter Stauchhärte eingesetzt werden (z.B. DE-OS 25 13 815).

Für flexible Verklebungen mit ausgezeichneter Kohäsionsfestigkeit werden beispielsweise in der DE-OS 27 19 720 sowohl einkomponentige als auch zweikomponentige Polyurethanklebstoffe auf Basis von organischen Polyisocyanaten und Dispersionen von Polymeren in organischen Hydroxylverbindungen eingesetzt.

Ein wesentlicher Nachteil von geklebten Holzkonstruktionen ist die Anfälligkeit des Klebstoffs gegenüber Feuchtigkeit, die zu einer Schwächung der Klebstoffschicht führt, die die Verwendung von geklebten Holzkonstruktionen in dauerfeuchten Umgebungen limitiert. Die Folge ist, dass im trockenen Zustand oft ein weitgehendes Fügeteilversagen des Holzes feststellbar ist, während bei Wasserlagerung, bzw. im Kochtest Kohäsionsversagen zu beobachten ist.

Die EP-A 1 343 832 beansprucht Isocyanat-terminierte Prepolymere als Holzklebstoffe, die einen Gehalt an organischen Füllstoffen auf Basis von Additionsprodukten von Toluylendiisocyanat und Hydrazin enthalten und dadurch eine hohe Wasserfestigkeit aufweisen.

Die Herstellung der gebrauchsfertigen Klebstoffe erfolgt in der Regel in zwei Stufen.

In der ersten Stufe werden die niedrigviskosen Ausgangsmaterialien, wie Polyole und Polyisocyanate in normalen Rührkesseln, die für solche niedrigviskosen Ausgangsmaterialien optimal geeignet sind, zu Isocyanatgruppen terminierten Prepolymeren umgesetzt.

Die Formulierung des gebrauchsfertigen Klebstoffs erfolgt in besonderen, für die Einarbeitung von zu Agglomeration neigenden Additiven, wie insbesondere Rheologiehilfsmitteln, besser geeigneten Rühraggregaten. Hier seien insbesondere mit Dissolverscheiben ausgerüstete Rührkessel genannt.

Ein Nachteil von bereits in der ersten Stufe Füllstoffe enthaltender Prepolymere ist die Tatsache, dass im normalen Produktionsablauf zur Herstellung von Isocyanat-terminierten Prepolymeren für die verschiedensten Einsatzgebiete solche Füllstoff enthaltende Prepolymere einen großen Reinigungsaufwand für die Produktionsanlagen erfordern, da ohne Reinigung die nachfolgende Partie eines Prepolymeren durch den Füllstoff der vorangegangenen Partie nicht mehr vollständig transparent im Aussehen wäre, was für viele Anwendungen den Einsatz unmöglich machen würde.

Die Aufgabe der vorliegenden Erfindung bestand somit in der Bereitstellung eines niedrigviskosen, im wesentlichen Füllstoff-freien Isocyanat-terminierten Prepolymeren als Rohstoff für einen einkomponentigen Holzklebstoff, insbesondere zur Verklebung tragender Bauteile, welcher über eine verbesserte Wasserfestigkeit verfiigt.

Es wurde nun überraschenderweise gefunden, dass Hydroxylgruppen enthaltende Fettsäuretriglyzeride, insbesondere Rizinusöl und Rizinusölderivate enthaltende Isocyanat-terminierte Prepolymere weniger dazu neigen, in das Holz zu penetrieren und so auch ohne Füllstoffe in dünner Schicht Substratversagen des Holzes beim Verkleben aufweisen. Unter Substratversagen ist zu verstehen, dass das Bruchbild in der Klebfuge zum größten Teil oder vollständigen Holzbruch zeigt, während in den anderen Fällen ein adhäsives Versagen, das heißt ein glatter Bruch an der Trennschicht Klebstoff Holz, oder ein kohäsives Versagen, das heißt Bruch innerhalb der Klebstoffschicht zu beobachten ist. Im Übrigen verleihen solche Polyole der Klebung eine hohe Hydrophobie, was die Eigenschaften, insbesondere in feuchter Umgebung positiv beeinflußt. Insbesondere erweisen sich unter Mitverwendung von Polyetherpolyolen erhältliche Prepolymere als besonders geeignet, da hierdurch die Prepolymere niedrig viskoser werden, was eine bessere Benetzung der Substratoberfläche ermöglicht und den späteren Klebstoffhersteller in seinen Formulierungsmöglichkeiten flexibler werden läßt. Rizinusöl selbst, mit einer Hydroxylzahl von ca. 160 bis 170 mg KOH/g erwies sich wegen zu hoher Viskosität der damit erhaltenen Prepolymere hinsichtlich der späteren Verarbeitung und Compoundierung als weniger gut geeignet. Um hier zu niederviskosen Prepolymeren zu kommen, muß der Anteil an Polyetherpolyolen erhöht werden, was die vorher genannten Vorteile aber wieder minimiert. Hingegen erwies sich insbesondere das im Handel befindliche einfach dehydratisierte Rizinusöl mit einer Hydroxylzahl von etwa 100 bis 140 mg KOH/g als optimal, da es dem Klebstoff eine sehr gute Hydrophobie verleiht, ohne übermäßig beim Prepolymeraufbau zum Viskositätsanstieg beizutragen und es so erlaubt, den Polyetheranteil geringer zu halten.

Gegenstand der vorliegenden Erfindung ist somit die Verwendung einer Zusammensetzung, enthaltend:

    a) mindestens ein Isocyanat-terminiertes Prepolymer, erhältlich durch die Umsetzung von

        a1) mindestens einem organischen Polyisocyanat,

        a2) einer Mischung von mindestens zwei organischen Polyhydroxylverbindungen, enthaltend:

            i) mindestens 20 Gew.-% an Hydroxylgruppen enthaltenden Fettsäuretriglyzeriden und

            ii) mindestens 20 Gew.-% im Mittel mindestens zwei Hydroxylgruppen aufweisende Polyether,

        wobei sich die Mengenangaben für i) und ii) auf die Gesamtmenge der Mischung a2) beziehen,

    sowie

    b) gegebenenfalls Hilfs- und Zusatzmittel

zur Herstellung von Beschichtungs- und/oder Klebstoffen, insbesondere als Klebstoff zum Verkleben von Holzsubstraten.

Die Mischung a2) weist bevorzugt eine mittlere Hydroxylzahl der Mischung von 50 bis 180 mg KOH/g auf.

Das Isocyanat-terminierte Prepolymer a) weist bevorzugt einen Isocyanat (NCO)-Gehalt von 8 bis 20 Gew.-%, bevorzugter von 10 bis 18 und noch bevorzugter von 12 bis 18 Gew.-% auf. Der Isocyanat-Gehalt bezeichnet den Gehalt von freien Isocyanatgruppen, wie er beispielsweise nach DIN 53185 bestimmt wird. Hierbei wird das Isocyanatgruppen enthaltende Prepolymer mit einem stöchiometrischen Überschuß von Dibutylamin umgesetzt, und der Isocyanatgruppengehalt durch Rücktitration der nicht umgesetzten Dibutylaminmenge bestimmt.

Zum Aufbau der Isocyanat-terminierten Prepolymere a) eignen sich die aus der Polyurethanchemie bekannten aliphatischen, cycloaliphatischen, aromatischen und heterocyclischen Polyisocyanate, wie sie z.B. von W. Siefken in Justus Liebigs Annalen der Chemie, 562, Seiten 75 bis 136, beschrieben werden. Weiterhin sind als Polyisocyanate solche Polyisocyanate geeignet, die z.B. über Isocyanurat-, Biuret, Uretdion- oder Carbodiimidgruppen verfügen. Derartige Polyisocyanate können hohe Funktionalitäten, z.B. von mehr als 3, aufweisen.

Bevorzugte Polyisocyanate sind 2,4- und/oder 2,6-Diisocyanatotoluol und ganz besonders bevorzugt MDI. MDI steht hier als ein Sammelbegriff für monomeres 2,4'- und/oder 4,4'-Diisocyanatodiphenylmethan aber auch für die unter dem Namen Polymer-MDI bekannten rohen Phosgenierungsprodukte von Anilin/Formaldehyd-Kondensaten mit einem Gehalt an höheren Oligomeren von 10 bis 60 Gew.-% und Funktionalitäten von 2,1 bis 3,0. Es ist auch möglich Gemische von monomeren und polymeren MDI einzusetzten. Ferner sind MDI-Derivate einsetzbar, bei denen zur besseren Handhabbarkeit des monomeren 4,4'-MDIs durch Einführung von Carbodiimid-, bzw.

Allophantagruppen bei Raumtemperatur als Flüssigkeiten lagerfähige Derivate des 4,4'-Diisocyanatodiphenylmethans mit Isocyanatgehalten von 28 bis 31 % erhalten werden. Ganz besonders bevorzugt sind MDI-Typen mit einem Monomeranteil von 70 bis 100 %, wobei der Anteil an 2,4'-MDI bevorzugt zwischen 10 und 70 Gew.-% betragen soll.

In einer bevorzugten Ausführungsform handelt es sich bei dem Polyisocyanat a1) um Diphenylmethandiisocyanate mit einem Gehalt an 2,4'-MDI von 10 bis 70 Gew.-% und einem Oligomerenanteil von 0 bis 30 Gew.-%.

Ganz besonders bevorzugt wird als Polyisocyanat a1) MDI mit einem Gehalt an 2,4'-MDI von 20 bis 60 Gew.-% und einem Oligomerenanteil von 0 bis 30 Gew.-% eingesetzt.

Die erfindungsgemäß verwendete Polyolmischung a2) mit einer mittleren Hydroxylzahl von bevorzugt 50 bis 180 mg KOH/g, besonders bevorzugt 60 bis 150 mg KOH/g besteht bevorzugt aus den Polyolen i) und ii). Bevorzugt enthält die Polyolmischung a2) 20 bis 80 Gew.-% der Komponente i) und 20 bis 80 Gew.-% der Komponente ii), wobei sich die Mengenangaben auf das Gesamtgewicht der Polyolmischung a2) beziehen.

Bei der erfindungsgemäß eingesetzten Komponente i) handelt es sich um ein oder mehrere Fettsäuretriglyzeride, die ein oder mehrere Hydroxylgruppen aufweisen, bevorzugt mit einer Hydroxylzahl von im Mittel 100 bis 170, bevorzugter 110 bis 150 und ganz besonders bevorzugt 110 bis 130 mg KOH/g. Besonders geeignet sind Triglyceride von hydroxylgruppen-enthaltenden, gesättigten oder ungesättigten Fettsäuren mit einer C-Zahl im Bereich von 8 bis 26, bevorzugt 12 bis 22, wie Ricinolsäure, bzw. deren Mischungen mit anderen, gesättigten oder ungesättigten Fettsäuren mit einer C-Zahl im Bereich von 8 bis 26, bevorzugt 12 bis 22, die keine Hydroxylgruppen aufweisen, wie insbesondere Linol-, Palmitin und/oder Stearinsäure. Ein bevorzugtes Triglycerid ist Ricinusöl und dessen Derivate. Die Komponente i) wird bevorzugt im Polyolgemisch a2) zur Herstellung der Isocyanat-terminierten Prepolymere a) in einer Menge von 20 bis 80 Gew.-%, vorzugsweise 40 bis 70 Gew.-%, bezogen auf die Gesamtmenge der Polyolmischung a2) verwendet. Als Hydroxylgruppen enthaltende Fettsäuretriglyzeride sind vor allem Rizinusöl und Rizinusölderivate zu nennen. Der Anteil an Rizinusöl der Hydroxylzahl 160 bis 170 mg KOH/g im Polyol i) kann zweckmäßig zwischen 0 und 70, vorzugsweise 0 bis 50 Gew.-% betragen. Erfindungsgemäß ganz besonders bevorzugt ist ein einfach dehydratisiertes Rizinusöl mit einer Hydroxylzahl von 110 bis 130 mg KOH/g in einer Menge von 30 bis 100, vorzugsweise 50 bis 100 und ganz bevorzugt zu 100 Gew.-% in der Komponente i) zu verwenden. Die Herstellung solcher Produkte, die bevorzugt als Komponente i) verwendet werden können, erfolgt im wesentlichen durch Abspaltung ca. eines Mols Wasser aus Rizinusöl, wodurch sich eine Doppelbindung ausbildet und die Hydroxylzahl sich von ca. 165 auf ca. 120 mg KOH/g reduziert. Solche Produkte sind im Handel erhältlich. Unter anderem kann hier beispielsweise auf das Rizinusöl PD® der Firma Alberdingk & Boley, Krefeld verwiesen werden.

In der vorliegenden Erfindung wird die Hydroxylzahl nach DIN 53240 bestimmt. Sie ist nach besagter DIN 53240 diejenige Menge an Kaliumhydroxid in mg, die der Essigsäure-Menge äquivalent ist, die bei der Acetylierung von 1 g Substanz gebunden wird.

Als im Mittel mindestens zwei, bevorzugt zwei bis vier Hydroxylgruppen aufweisende Polyether der Komponente ii) sind besonders die im Handel befindlichen Additionsprodukte von Propylenoxid und/oder Ethylenoxid an kurzkettige Diole, wie beispielsweise Propylenglykol und/oder Triole, wie beispielsweise Glyzerin oder Trimethylolpropan oder auch Amine wie beispielsweise Triethanolamin oder Ethylendiamin geeignet. Diese Addition erfolgt normalerweise basenkatalysiert, kann aber auch über besondere Zink-Kobalt-Doppelmetallkomplexe (z.B. US-Pat. 3829505) erfolgen. Die Polyetherpolyole der Komponente ii) haben zweckmäßig mittlere Hydroxylzahlen von 20 bis 200 mg KOH/g, bevorzugt 25 bis 150 mg KOH/g und ganz besonders bevorzugt 30 bis 120 mg KOH/g. Bevorzugt sind verzweigte Polyetherpolyole mit durchschnittlich drei bis vier Hydroxylgruppen pro Molekül. Bei Verwendung der Klebstoffe zur Verklebung von sehr feuchten Hölzern ist die Mitverwendung von längeren Ethylenoxidblöcken in den Polyetherpolyolen günstig, um eine bessere Benetzung des Holzes zu gewährleisten. Ebenso sind Polytetramethylenetherpolyglykole mit Hydroxylzahlen von 70 bis 130 mg KOH/g geeignet. Selbstverständlich können auch beliebige Mischungen derartiger Polyhydroxylverbindungen eingesetzt werden.

Besonders bevorzugt handelt es sich bei der Polyetherkomponente in ii) um Poly(propylenoxidethylenoxid)-copolymer-Polyole mit einem Gehalt an Ethylenoxid von 0 bis 30 Gew.-%, bevorzugter 0 Gew.-% bis 20 Gew.-%. Die Länge der Ethylenoxidkette sollte zwischen 10 und 20 Ethylenoxideinheiten liegen. Längere Ethylenoxideinheiten neigen in der Kälte zur Kristallisation und könnten so die Lagerstabilität des Prepolymeren in der Kälte negativ beeinflussen. Ganz besonders bevorzugt werden Polypropylenetherpolyole mit einer mittleren Funktionalität von drei bis vier und einer mittleren Hydroxylzahl von 40 bis 120 mg KOH/g wie sie durch Addition von Propylenoxid an Starter wie Triethanolamin und Ethylendiamin erhalten werden. Eine solche anteilige Verwendung verleiht den Prepolymeren bereits eine gewisse Basisreaktivität gegenüber Feuchtigkeit.

Bevorzugt weisen die Polyether der Komponente (ii) ein Zahlenmittel des Molekulargewichts im Bereich von etwa 600 bis etwa 6000, bevorzugt von etwa 800 bis etwa 5000. auf. Molekulargewichte außerhalb des genannten Bereiches können nachteilig sein, weil hierdurch die Viskosität der Prepolymere erhöht werden könnte. Das Zahlenmittel des Molekulargewichts ($M_z$ wird nach der folgenden Formel berechnet:

$$M_z = (\text{mittlere Funktionalität Fm} * 56100)/ \text{mittlere Hydroxylgruppenzahl}$$

Zur Herstellung des NCO-Prepolymers a) wird das Polyolgemisch a2) mit dem organischen Polyisocyanat a1) zur Reaktion gebracht.

Bei der Herstellung des NCO-Prepolymers a) kommen auf jede gegenüber Isocyanatgruppen reaktionsfähige Gruppe 3 bis 30, bevorzugt, 5 bis 10 Isocyanatgruppen. Der Anteil der Polyolkomponente a2) im fertigen NCO-Prepolymer liegt zwischen 20 bis 75 Gew.-%, bevorzugt zwischen 30 bis 60 Gew.-%, der Anteil der Polyisocyanatkomponente a) liegt zwischen 80 bis 25 Gew.-%, bevorzugt zwischen 70 bis 40 Gew.-%.

Die Herstellung der Prepolymeren erfolgt in normalen Rührkesseln, wobei immer das Polyisocyanat vorgelegt wird und die Polyole nacheinander oder in Mischung bei Temperaturen von 50 bis 90°C gegebenenfalls unter Schutzgasatmosphäre zudosiert werden. Die Reaktionstemperatur sollte bevorzugt zwischen 70 und 90°C liegen. Die Reaktion kann aber auch kontinuierlich in einem Reaktionsrohr oder einer Rührkesselkaskade erfolgen. Bevorzugt erfolgt die Reaktion nicht in Gegenwart von Lösungsmitteln. Gewöhnlich ist die Reaktion nach zwei bis vier Stunden beendet und das Prepolymere hat einen Isocyanatgehalt der leicht unter dem theoretisch ermittelten liegen sollte.

Bevorzugte Prepolymere werden mit organischen Polyisocyanaten a1) mit einem Anteil von 0 bis 80, vorzugsweise 20 bis 60 Gew.-% an difunktionellen 2,4'-MDI neben 4,4'-MDI erhalten. Insbesondere der 2,4'-MDI-Anteil trägt zur Lagerstabilität der Prepolymeren bei. Es können selbstverständlich auch Polyisocyanate mit einem Anteil von oligomerem MDI mit der Funktionalität größer 2 von 5 bis 50, vorzugsweise 10 bis 30 Gew.-% eingesetzt werden. Vorzugsweise sollte in der Komponente a1) in der Summe über alle eingesetzten MDI-Produkte der Gehalt an monomerem Diphenylmethandiisocyanat zwischen 70 und 100 Gew.-%, der Gehalt an 2,4'-Diphenylmethandiisocyanat zwischen 0 und 80, vorzugsweise zwischen 10 und 70 Gew.-% liegen. Der Gehalt an höheren Oligomeren sollte zwischen 0 und 30 Gew.-% liegen

Grundsätzlich besteht die Möglichkeit, bei der Herstellung der NCO-Prepolymere für die erfindungsgemäße Verwendung entweder (I) direkt ein 2,4'-MDI und/oder 4,4'-MDI enthaltendes organisches Polyisocyanat a1) mit einem Anteil an höheren Oligomeren von über 10 bis 50 Gew.-%, einzusetzen oder (II) zunächst die Reaktion mit einem monomeren Diisocyanat, welches einen 2,4'-MDI-Gehalt von 40 bis 70 Gew.-% enthält, bis zu einem NCO-Gehalt von 8 bis 12 Gew.-% durchzuführen und anschließend ein Polyisocyanat, mit einem oligomeren Anteil von bis zu 70 Gew.-%, bevorzugt bis zu 50 Gew.-% zuzusetzen, so dass sich in der Mischung ein NCO-Gehalt von 14 bis 18 Gew.-% einstellt.

Das nach (II) hergestellte Prepolymer hat eine niedrigere Viskosität gegenüber dem Prepolymer, welches nach (I) erhalten wird.

Grundsätzlich können diese Isocyanatgruppen enthaltenden Prepolymere nachträglich mit polyfunktionellen aliphatischen Isocyanaten versetzt werden. Durch eine solche Vorgehensweise kann die Funktionalität des Systems erhöht wertden, ohne dass eine Erhöhung der Viskosität des Prepolymeren einhergeht. Besonders bevorzugte Polyisocyanate sind hier Biuretgruppen oder Isocyanuratgruppen enthaltende Hexamethylendiisocyanatderivate, wie sie unter anderem unter den Handelsnamen Desmodur N 100 oder Desmodur N 3300 der Bayer AG im Handel sind.

Die so hergestellten NCO-Prepolymere a) sind frei von Füllstoffen und weisen bei 25°C Viskositäten von bevorzugt kleiner 3000, bevorzugter kleiner 2000 mPa*s auf.

Die so hergestellten erfindungsgemäßen Isocyanatgruppen enthaltenen Prepolymere können prinzipiell bereits in dieser Form als Klebstoffe oder Beschichtungsstoffe eingesetzt werden.

Der Einsatz in dieser Form ist jedoch nicht üblich, sondern die Produkte werden für ihre jeweiligen Anwendungen bevorzugt modifiziert.

Die Modifikation durch Zugabe von spezifischen Zusatzmitteln b) erfolgt zweckmäßigerweise in besonderen Rühraggregaten, die in der Lage sind geringe, insbesondere zur Agglomeration neigende Zusatzstoffe in den Prepolymeren schnell und gleichmäßig zu verteilen. Zu nennen sind hier insbesondere Rühraggregate mit Dissolverscheiben. All diese Operationen sind nicht erfindungswesentlich und seien in der Folge kurz beschrieben.

Die Rohstoffe der vorhergehenden Stufe bedürfen einer Feineinstellung in bezug auf die Reaktivität gegen Feuchtigkeit durch Zugabe von weiteren Katalysatoren. So erfordert ein Klebstoff zum Verkleben von großen Flächen eine andere Reaktivität als ein Klebstoff, der für sehr kleine Flächen gedacht ist. Eine beschleunigte Reaktion mit Luftfeuchtigkeit kann mit den gängigen, in der Polyurethanchemie üblichen Katalysatoren wie beispielsweise tertiären Aminen, wie Diazabicycloctan, Dimorpholinodiethylether, Bis(dimethylaminoethyl)ether und/oder Metallkatalysatoren, wie beispielsweise Dibutylzinndilaurat erreicht werden.

Die erfindungsgemäßen Rohstoffe a) müssen in ihrem rheologischen Verhalten den späteren Anwendungserfordernissen angepaßt werden. Wegen der niedrigen Vioskosität würden die Produkte beispielsweise an senkrechten Flächen ablaufen, bzw. abtropfen.

Durch Zugabe von oberflächlich hydrophobierten Aerosilen, Kurzfasern wie Kevlarpulp oder ähnliche Mikrofasern, aber auch Reaktion des Prepolymeren a) mit aliphatischen, bzw. aromatischen Polyaminen, wie beispielsweise Isophorondiamin oder Diethyltoluylendiamin in einer Mengen von 0,2 bis 5 % der stöchiometrischen Menge kann das niederviskose Prepolymer a) in eine hoch strukturviskose Form überführt werden, die unter dem Einfluß von Scherkräften wieder gut verarbeitbar wird aber ansonsten an senkrechten Flächen nicht mehr frei fließfähig ist.

Für mehr Spalt überbrückende Anwendungen kann die Zugabe von größeren Mengen an wasserfreien Füllstoffen von Vorteil sein.

Weitere Modifizierungsmöglichkeiten sind die Zugabe von natürlichen oder synthetischen Harze zur Erhöhung der Anfangsfestigkeit, von Alterungsschutzmitteln, oder Pigmenten, Farbstoffen oder ähnlichen Additiven, um eine leichte visuelle Kontrolle über einen gleichmäßigen Auftrag zu erhalten, etc.

Der Anteil dieser für Klebstoffe übliche Hilfs- und Zusatzmittel b) an der Zusammensetzung beträgt maximal etwa 30 Gew.-%, bevorzugt maximal etwa 10 Gew.-% bezogen auf die Gesamtmenge der Zusammensetzung. Dementsprechend beträgt der Anteil des Isocyanat-terminierten Prepolymers in der erfindungsgemäß verwendeten Zusammensetzung bevorzugt von 70 bis 100 Gew.-%, bevorzugter von 90 bis 100 Gew.-% bezogen auf die Gesamtmenge der Zusammensetzung.

Die erfindungsgemäß verwendete Zusammensetzung enthält weiterhin bevorzugt im wesentlichen keine organischen Lösungsmittel. "Im wesentlichen keine organischen Lösungsmittel" im Sinne der Erfindung bedeutet bevorzugt weniger als 5 Gew.-%, bevorzugter weniger als 3 Gew.-%, noch bevorzugter weniger als 1 Gew.-%, am meisten bevorzugt 0 Gew.-%, also keine organischen Lösungsmittel, wobei die Mengenangaben jeweils auf die Gesamtmenge der Zusammensetzung bezogen sind.

Die Zusammensetzung wird erfindungsgemäß als Beschichtungs- und Klebstoff, insbesondere als Klebstoff zum Verkleben von Holzsubstraten verwendet. Ein Klebstoff im Sinne der Erfindung ist nach DIN 16920, 06/1981 ein nichtmetallischer Stoff, der Fügeteile durch Flächenhaftung (Adhäsion) und innere Festigkeit (Kohäsion) verbindet. Holzsubstrate, die erfindungsgemäß verklebt werden können, sind insbesondere tragende Holzbauteile. Die Holzsubstrate können aus allen möglichen Holzarten bestehen, wie zum Beispiel Ahorn, Apfelbaum, Birke, Birnbaum, Buche, Douglasie, Eibe, Eiche, Elsbeere, Erle, Esche, Fichte, Hainbuche, Kiefer, Kirschbaum, Lärche, Linde, Nussbaum, Pappel, Platane, Robinie, Rosskastanie, Rotbuche, Rüster, Schweizer Birnbaum, Tanne, Ulme, Weide und Zwetschge und Afrormosia, Aningre, Arve, Bete, Bubinga, Ebenholz, Hickory, Iroko, Kambala, Kevazingo, Limba, Mahagoni, Makassar, Makore, Mansonia, Meranti, Mooreiche, Mutenye, Myrte, Oliv-Esche, Oregon Pine, Padouk, Palisander, Ostind, Palisander, Rio, Red Cedar, Redwood, Riegelahom, Riesenlebensbaum, Sapelli (-Mahagoni), Saquoie, Sen, Sucupira, Tchitola, Teak, Vogelaugenahorn, Wenge, und Zebrano. Bevorzugt sind Buche, Fichte, Lärche, Douglasie, Kiefer und Robinie.

Die Erfindung betrifft weiterhin ein Verfahren zur Herstellung verklebter Holzsubstrate, dass das Auftragen der erfindungsgemäß verwendeten Zusammensetzungen auf mindestens ein Holzsubstrat in einer Menge von 100 bis 500 g/m², vorzugsweise 150 bis 350 g/m², das anschließende Verbinden dieses Holzsubstrates mit mindestens einem weiteren Holzsubstrat, das gegebenenfalls ebenfalls mit der erfindungsgemäß verwendeten Zusammensetzung beschichtet ist, und das anschließende Aushärten der verbundenen Holzsubstrate gegebenenfalls unter Anwendung von Druck von beispielsweise bis zu 0,5 bis 1,0 N/mm² bei Flächenverleimungen, bzw. 2 bis 15 N/mm² bei der Keilzinkenverleimung umfasst. Die Erfindung betrifft schließlich auch die verklebten Holzsubstrate, die nach dem vorstehend beschriebenen Verfahren erhältlich sind.

Es können selbstverständlich auch andere Materialien wie beispielsweise Mineralwolle oder Isolierschäume aus Polyurethan, Polystyrol, etc. mit Deckschichten wie beispielsweise, Aluminium, Stahl oder Holz verklebt werden. Bei allen Nichtholzapplikationen muß jedoch dafür Sorge getragen werden, dass ein genügendes Angebot an Feuchtigkeit zur Aushärtung vorhanden ist, das im Bedarfsfall durch zusätzliche Feuchtigkeit in Form von Nebeln oder Wassersprühern erfolgen kann.

Die Erfmdung wird durch die folgenden Beispiele genauer erläutert. Dem Fachmann ist bewusst, dass sich der Umfang dieser Erfindung nicht auf diese Beispiele beschränkt.

**Beispiele**

**Prepolymerherstellung**

Die Polyisocyanate werden bei 70°C vorgelegt und die entwässerten Polyole (Wassergehalt <0,05%) werden so zugegeben, dass die Temperatur im Bereich zwischen 60 und 80°C liegt.

**Polyole**

Polyol I    Rizinusöl PD (Alberdingk & Boley) mit einer OH-Zahl von 122 mg KOH/g; mittlere Funktionalität von ca. 2.

Polyol II    Desmophen® 5034 BT (Bayer MaterialScience AG, Leverkusen): Polypropylenetherpolyol der OH-Zahl 35 mg KOH/g gestartet auf Glyzerin, Ethylenoxidgehalt ca. 14 Gew.-%; mittlere Funktionalität ca. 2,85.

Polyol III   Desmophen® 2060 BD (Bayer MaterialScience AG, Leverkusen): Polypropylenetherglykol der OH-Zahl 56 mg KOH/g; mittlere Funktionalität ca. 1,96.

Polyol IV    Rizinusöl mit einer OH-Zahl von 166 mg KOH/g; mittlere Funktionalität ca. 2,9.

Polyol V     Desmophen® 4059 EV (Bayer MaterialScience AG, Leverkusen): Polypropylenetherpolyol der OH-Zahl 60 mg KO/g, gestartet auf Ethylendiamin; mittlere Funktionalität ca. 3,7.

**Polyisocyanate**

Iso-I    Desmodur® 2460 M (Bayer MaterialScience AG, Leverkusen) (Monomer-MDI): Mischung von 54,5 Gew.-% 2,4'-MDI und 45,4 Gew.-% 4,4'-MDI.

Iso-II   Desmodur® VKS 20 F (Bayer MaterialScience AG, Leverkusen) (Polymer-MDI) mit einem NCO-Gehalt von 31,5 % und einem Polymeranteil von ca. 50 Gew.-%.

**Beispiel 1 (erfindungsgemäß)**

562 g Iso I werden vorgelegt und auf 70°C erwärmt. Unter Rühren und Stickstoffatmosphäre werden 219 g Polyol III zügig zugegeben, und anschließend werden 219 g Polyol I eingetropft. Nach Abklingen der exothermen Reaktion wird die Reaktion über 4 Stunden bei 80°C zu Ende geführt. Man erhält ein NCO-Prepolymer mit einem NCO-Gehalt von 15,8 % und einer Viskosität von 1100 mPa*s bei 25°C.

**Beispiel 2 (erfindungsgemäß)**

576 g Iso I werden vorgelegt und auf 70°C erwärmt. Unter Rühren und Stickstoffatmosphäre werden 106 g Polyol III zügig zugegeben, und anschließend werden 318 g Polyol I eingetropft. Nach Abklingen der exothermen Reaktion wird die Reaktion über 4 Stunden bei 80°C zu Ende geführt. Man erhält ein NCO-Prepolymer mit einem NCO-Gehalt von 15,7 % und einer Viskosität von 985 mPa*s bei 25°C.

**Beispiel 3 (erfindungsgemäß)**

549 g Iso I werden vorgelegt und auf 70°C erwärmt. Unter Rühren und Stickstoffatmosphäre werden 338 g Polyol III zügig zugegeben, und anschließend werden 113 g Polyol I eingetropft. Nach Abklingen der exothermen Reaktion wird die Reaktion über 4 Stunden bei 80°C zu Ende geführt. Man erhält ein NCO-Prepolymer mit einem NCO-Gehalt von 15,7 % und einer Viskosität von 890 mPa*s bei 25°C.

**Beispiel 4 (weniger bevorzugt)**

586 g Iso I werden vorgelegt und auf 70°C erwärmt. Unter Rühren und Stickstoffatmosphäre werden 208 g Polyol III zügig zugegeben, und anschließend werden 208 g Polyol IV eingetropft. Nach Abklingen der exothermen Reaktion wird die Reaktion über 4 Stunden bei 80°C zu Ende geführt. Man erhält ein NCO-Prepolymer mit einem NCO-Gehalt von 16,1 % und einer Viskosität von 4450 mPa*s bei 25°C.

**Beispiel 5 (Vergleich)**

550 g Iso I werden vorgelegt und auf 70°C erwärmt. Unter Rühren und Stickstoffatmosphäre werden 225 g Polyol III zügig zugegeben, und anschließend werden 225 g Polyol II eingetropft. Nach Abklingen der exothermen Reaktion wird die Reaktion über 4 Stunden bei 80°C zu Ende geführt. Man erhält ein NCO-Prepolymer mit einem NCO-Gehalt von 15,9 % und einer Viskosität von 910 mPa*s bei 25°C.

**Beispiel 6 (erfindungsgemäß)**

554 g Iso I werden vorgelegt und auf 70°C erwärmt. Unter Rühren und Stickstoffatmosphäre werden 223 g Polyol II zügig zugegeben, und anschließend werden 223 g Polyol I eingetropft. Nach Abklingen der exothermen Reaktion wird die Reaktion über 4 Stunden bei 80°C zu Ende geführt. Man erhält man ein NCO-Prepolymer mit einem NCO-Gehalt von 16,1 % und einer Viskosität von 1550 mPa*s bei 25°C.

**Beispiel 7 (erfindungsgemäß)**

299 g Iso I und 279 g Iso II werden vorgelegt und auf 70°C erwärmt. Unter Rühren und Stickstoffatmosphäre werden 211 g Polyol II zügig zugegeben, und anschließend werden 211 g Polyol I eingetropft. Nach Abklingen der exothermen Reaktion wird die Reaktion über 4 Stunden bei 80°C zu Ende geführt. Man erhält ein NCO-Prepolymer mit einem NCO-Gehalt von 15,7 % und einer Viskosität von 3380 mPa*s bei 25°C.

**Beispiel 8 (erfindungsgemäß)**

229 g Iso I werden vorgelegt und auf 70°C erwärmt. Unter Rühren und Stickstoffatmosphäre werden 211 g Polyol II zügig zugegeben, und anschließend werden 211 g Polyol I eingetropft. Nach 20 Minuten werden 279 g Iso II zugegeben. Die Reaktion wird über 4 Stunden bei 80°C zu Ende geführt. Man erhält ein NCO-Prepolymer mit einem NCO-Gehalt von 15,6 % und einer Viskosität von 2950 mPa*s bei 25°C.

**Beispiel 9 (erfindungsgemäß)**

565,1 g Iso I werden vorgelegt und auf 70°C erwärmt. Unter Rühren und Stickstoffatmosphäre werden 217,5 g Polyol I zügig zugegeben, und anschließend werden 217,5 g Polyol V eingetropft. Nach 20 Minuten werden 279 g Iso II zugegeben. Die Reaktion wird über 4 Stunden bei 80°C zu Ende geführt. Man erhält ein NCO-Prepolymer mit einem NCO-Gehalt von 15,92 % und einer Viskosität von 1670 mPa*s bei 25°C.

**Beispiel 10 (erfindungsgemäß)**

563 g Iso I werden vorgelegt und auf 70°C erwärmt. Unter Rühren und Stickstoffatmosphäre werden 109,2 g Polyol I zügig zugegeben, und anschließend werden 109,5 g Polyol IV und 218,5 g Polyol II eingetropft. Nach 20 Minuten werden 279 g Iso II zugegeben. Die Reaktion wird über 4 Stunden bei 80°C zu Ende geführt. Man erhält ein NCO-Prepolymer mit einem NCO-Gehalt von 15,71 % und einer Viskosität von 1840 mPa*s bei 25°C.

**Holzklebungen**

Buchenholzprüfkörper mit den Abmessungen 20x40x5 mm werden 20 mm überlappend mit den Prepolymeren mit dem Pinsel eingestrichen (Auftragsmenge ca. 100 bis 300 g/m$^2$) und die Prüfkörper bei Raumtemperatur fugenfrei in einer Presse bei einem Druck von 0,6 N/mm2 für 24 Stunden belassen.
Nach 14 Tagen Lagerung bei 23°C und 50 % RLF werden die Prüfkörper im Zugscherversuch trocken gerissen und nach 24 Stunden Wasserlagerung (23°C) feucht gerissen.
Man erhielt die folgenden Ergebnisse:

Prüfergebnisse

| Prüfart | Trockenlagerung | Feuchtlagerung |
| --- | --- | --- |
| Ergebnis | N/mm$^2$ / %FTV | N/mm$^2$ / %FTV |
| Beispiel 1 | 11,7 / 100 | 8,9 / 100 |
| Beispiel 2 | 12,3 / 90 | 8,1 / 80 |
| Beispiel 3 | 11,5 / 80 | 6,9 / 50 |
| Beispiel 4 | 10,8 / 80 | 7,8 / 70 |
| Beispiel 5 (Vergleich) | 10,9 / 30 | 5,4/0 |
| Beispiel 6 | 11,6/90 | 8,7 / 90 |
| Beispiel 7 | 10,6 / 100 | 8,2 / 80 |
| Beispiel 8 | 11,9/100 | 8,6/90 |
| Beispiel 9 | 11,9 / 100 | 7,6/90 |
| Beispiel 10 | 10,2/90 | 7,2/ 80 |

N/mm$^2$    Klebfestigkeit im Zugscherversuch bei einer Vorschubgeschwindigkeit von 50 mm/min.

FTV: Fügeteilversagen in % der Klebfläche

Man ersieht aus der Tabelle, dass die erfindungsgemäßen NCO-Prepolymere (Beispiel 1, 2, 3, 4, 6, 7 und 8) bei Lagerung in Wasser durchschnittlich ein hohes Fügeteilversagen aufweisen. Beispiel 4 weist ebenfalls ein beträchtliches Fügeteilversagen auf, jedoch ist die Viskosität mit ca. 4500 mPas sehr hoch und würde sich unter Praxisbedingungen beim Formulieren mit Füllstoffen, Katalysatoren, Farbstoffen und Rheologiehilfsmitteln wegen weiter steigender Viskosität in der Praxis nur noch sehr schwierig verarbeiten lassen.

Das nicht erfindungsgemäße Prepolymer nach Beispiel 5 zeigt im Wasserlagerungsversuch ein deutlich schlechteres Verhalten.

**Patentansprüche**

1. Verwendung einer Zusammensetzung, enthaltend:

   a) mindestens ein Isocyanat-terminiertes Prepolymer, erhältlich durch die Umsetzung von

      a1) mindestens einem organischen Polyisocyanat,
      a2) einer Mischung von mindestens zwei organischen Polyhydroxylverbindungen, enthaltend:

         i) mindestens 20 Gew.-% an Hydroxylgruppen enthaltenden Fettsäuretriglyzeriden und
         ii) mindestens 20 Gew.-% im Mittel mindestens zwei Hydroxylgruppen aufweisende Polyether, wobei sich die Mengenangaben für i) und ii) auf die Gesamtmenge der Mischung a2) beziehen,

      sowie
      b) gegebenenfalls Hilfs- und Zusatzmittel

   zur Herstellung von Beschichtungs- und/oder Klebstoffen.

2. Verwendung der Zusammensetzung nach Anspruch 1, worin die Mischung a2) eine mittlere Hydroxylzahl von 50 bis 180 mg KOH/g aufweist.

3. Verwendung nach Anspruch 1 oder 2, **dadurch gekennzeichnet, dass** der Isocyanatgehalt des Prepolymeren a) zwischen 8 und 20 Gew.-% liegt.

4. Verwendung nach einem der Ansprüche 1 bis 3, **dadurch gekennzeichnet, dass** der Isocyanatgehalt des Prepolymeren a) zwischen 8 und 18 Gew.-% liegt.

5. Verwendung nach einem der Ansprüche 1 bis 4, **dadurch gekennzeichnet, dass** als Polyisocyanat a1) Diphenylmethandiisocyanate mit einem Gehalt an 2,4'-MDI von 10 bis 70 Gew.-% und einem Oligomerenanteil von 0 bis 30 Gew.-% eingesetzt wird.

6. Verwendung nach einem der Ansprüche 1 bis 5, **dadurch gekennzeichnet, dass** die Hydroxylgruppen enthaltenden Fettsäuretriglyzeride a2)i) im Mittel eine Hydroxylzahl von 100 bis 170 mg KOH/g aufweisen.

7. Verwendung nach Anspruch 6, **dadurch gekennzeichnet, dass** die Hydroxylzahl der Hydroxylgruppen enthaltenden Fettsäuretriglyzeride a2)i) im Mittel 110 bis 130 mg KOH/g beträgt.

8. Verwendung nach einem der Ansprüche 1 bis 7, **dadurch gekennzeichnet**, das es sich bei den Hydroxylgruppen enthaltenden Fettsäuretriglyzeriden a2)i) um im wesentlichen einfach dehydratisiertes Rizinusöl mit einer Hydroxylzahl von 110 bis 130 mg KOH/g handelt.

9. Verwendung nach einem der Ansprüche 1 bis 8, **dadurch gekennzeichnet, dass** das Polyetherpolyol ii) in der Mischung a2) eine Hydroxylzahl von 20 bis 200 mg KOH/g aufweist.

10. Verwendung nach einem der Ansprüche 1 bis 9, **dadurch gekennzeichnet, dass** das Polyetherpolyol ii) in der Mischung a2) im wesentlichen aus Glyzerin, Trimethylolpropan, Triethanolamin und/oder Ethylendiamin gestarteten Polypropylenetherpolyolen besteht, worin das Molekulargewicht des Polyetherpolyols ii) im Bereich von 800 bis 6000 liegt.

**11.** Verwendung nach einem der Ansprüche 1 bis 10, **dadurch gekennzeichnet, dass** der Gehalt der Komponente i) in der Polyolmischung a2) 40 bis 70 Gew.-%, bezogen auf die Gesamtmenge der Polyolmischung a2) beträgt.

**12.** Verwendung nach einem der Ansprüche 1 bis 10, **dadurch gekennzeichnet, dass** es sich bei der Polyetherkomponente in ii) um Poly(propylenoxid-ethylenoxid)-copolymer-Polyole mit einem Gehalt an Ethylenoxid von 0 bis 20 Gew.-% handelt.

**13.** Verwendung nach einem der Ansprüche 1 bis 12 zur Herstellung eines Klebstoffes zum Verkleben von Holzsubstraten.

**14.** Verwendung der Zusammensetzung, definiert in einem der Ansprüche 1 bis 12, zum Verkleben von Holzsubstraten.

**15.** Verfahren zur Herstellung verklebter Holzsubstrate, dass das Auftragen der in einem der Ansprüche 1 bis 12 definierten Zusammensetzungen auf mindestens ein Holzsubstrat, das anschließende Verbinden dieses Holzsubstrates mit mindestens einem weiteren Holzsubstrat, das gegebenenfalls ebenfalls mit der in einem der Ansprüche 1 bis 12 definierten Zusammensetzungen beschichtet ist, und das anschließende Aushärten der verbundenen Holzsubstrate gegebenenfalls unter Anwendung von Druck umfasst.

**16.** Verklebte Holzsubstrate, erhältlich nach dem Verfahren nach Anspruch 15.

**Europäisches Patentamt**

**EUROPÄISCHER RECHERCHENBERICHT**

Nummer der Anmeldung

EP 05 02 8705

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 44 06 211 A1 (HENKEL KGAA, 40589 DUESSELDORF, DE) 31. August 1995 (1995-08-31) * Seite 3, Zeile 66 - Seite 4, Zeile 9 * * Seite 4, Zeilen 44-61 * Beispiele 2,3; Vergleichsbeispiel 1 * Ansprüche 1-9 * ----- | 1-16 | INV. C08G18/12 C08G18/36 C08G18/66 C09J175/04 C09D175/04 |
| X | DE 199 47 563 A1 (HENKEL KGAA) 19. April 2001 (2001-04-19) * Spalte 1, Zeile 61 - Spalte 2, Zeile 15 * * Spalte 3, Zeilen 16-37 * * Spalte 5, Zeilen 46,47 * * Beispiele 3,4 * * Ansprüche 1-6 * ----- | 1-7,9-14 | |
| X | EP 0 709 414 A (ALBERDINGK BOLEY GMBH) 1. Mai 1996 (1996-05-01) * Beispiele 5,6 * * Ansprüche 1-6 * ----- | 1-4,6-12 | |
| Y | WO 02/053672 A (BASF AKTIENGESELLSCHAFT; HAEBERLE, KARL; LEUBNER, MARCUS; PFUETZE, EBE) 11. Juli 2002 (2002-07-11) * Seite 2, Zeilen 35-39 * * Seite 6, Zeilen 1-17; Ansprüche 1-11 * ----- | 1-16 | RECHERCHIERTE SACHGEBIETE (IPC) C08G C09J C09D |
| Y | DE 41 14 022 A1 (HENKEL KGAA, 4000 DUESSELDORF, DE) 5. November 1992 (1992-11-05) * Beispiele 3-5 * * Ansprüche 1-10 * ----- | 1-16 | |

Der vorliegende Recherchenbericht wurde für alle Patentansprüche erstellt

| Recherchenort | Abschlußdatum der Recherche | Prüfer |
|---|---|---|
| München | 26. April 2006 | Krätzschmar, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 02 8705

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2006

| Im Recherchenbericht angeführtes Patentdokument | Datum der Veröffentlichung | Mitglied(er) der Patentfamilie | Datum der Veröffentlichung |
|---|---|---|---|
| DE 4406211 A1 | 31-08-1995 | AT 169647 T<br>DK 746577 T3<br>WO 9523172 A1<br>EP 0746577 A1<br>ES 2119395 T3 | 15-08-1998<br>10-05-1999<br>31-08-1995<br>11-12-1996<br>01-10-1998 |
| DE 19947563 A1 | 19-04-2001 | WO 0125184 A1<br>EP 1218332 A1<br>JP 2003511486 T | 12-04-2001<br>03-07-2002<br>25-03-2003 |
| EP 0709414 A | 01-05-1996 | AT 180801 T<br>DE 4438351 A1<br>DK 709414 T3<br>ES 2088380 T1<br>GR 96300051 T1<br>GR 3030961 T3 | 15-06-1999<br>02-05-1996<br>29-11-1999<br>16-08-1996<br>30-09-1996<br>30-11-1999 |
| WO 02053672 A | 11-07-2002 | CA 2433055 A1<br>DE 10100220 A1<br>EP 1349901 A1<br>NO 20033056 A<br>NZ 526742 A<br>US 2004071981 A1 | 11-07-2002<br>11-07-2002<br>08-10-2003<br>03-09-2003<br>24-03-2005<br>15-04-2004 |
| DE 4114022 A1 | 05-11-1992 | KEINE | |

EPO FORM P0461

Für nähere Einzelheiten zu diesem Anhang : siehe Amtsblatt des Europäischen Patentamts, Nr.12/82